(19) **Europäisches Patentamt / European Patent Office / Office européen des brevets**

(11) **EP 4 589 868 A1**

(12) # EUROPEAN PATENT APPLICATION

(43) Date of publication:
**23.07.2025 Bulletin 2025/30**

(21) Application number: **24152461.0**

(22) Date of filing: **17.01.2024**

(51) International Patent Classification (IPC):
**H04J 11/00** (2006.01)     **H04L 1/00** (2006.01)
**H04B 7/0452** (2017.01)     **H04B 7/06** (2006.01)

(52) Cooperative Patent Classification (CPC):
**H04L 1/0041; H04J 11/004; H04L 1/0045;
H04W 52/281;** H04B 7/0452; H04B 7/0617;
H04L 1/0054; H04L 1/0055; H04L 1/0061;
H04L 2001/0093; H04L 2001/0098

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vestel Elektronik Sanayi ve Ticaret
A.S.
45030 Manisa (TR)**

(72) Inventors:
• **ABIDRABBU, Shaima**
  **45030 Manisa (TR)**
• **ALI, Sawaira Rafaqat**
  **34810 Istanbul (TR)**
• **AHMED, Haji M. Furqan**
  **45030 Manisa (TR)**
• **ARSLAN, Hüseyin**
  **34810 Istanbul (TR)**

(74) Representative: **Grünecker Patent- und
Rechtsanwälte
PartG mbB
Leopoldstraße 4
80802 München (DE)**

(54) **ADAPTIVE TRANSMISSION BASED ON RSMA**

(57)     The present disclosure relates to methods and apparatuses for transmitting and/or receiving data. For example a data transmitting includes obtaining first data addressed to a first wireless device and second data addressed to a second wireless device different from the first wireless device; generating a first redundancy version from the first data and a second redundancy version from the second data; obtaining common data as a separable combination of the first redundancy version and the second redundancy version; and obtaining encoded first data by forward error correction code, FEC, encoding, of the first data and obtain encoded second data by FEC encoding of the second data. The transmitter then transmits a signal carrying the encoded first data, the encoded second data, and the common data at the same time on different beams. Correspondingly, a user parses the common and the private data and combines them.

**FIG. 6**

## Description

The present disclosure relates generally to wireless communication, and in particular to a rate splitting based transmission and reception as well as to the corresponding devices.

## BACKGROUND

There have been several multiple access approaches applies and/or studied for wireless communications so far. Among them are an orthogonal multiple access (OMA), physical layer multicasting, space division multiple access (SDMA), and non-orthogonal multiple access (NOMA). An example of OMA is the Orthogonal Frequency Division Multiple Access (OFDMA) used in 4th generation (4G) of cellular communications (Long Term Evolution, LTE) as well as in IEEE 802.11 (WiFi) standard family. The SDMA may be based on linear precoding such as the one presently used in 5th generation (5G) of cellular systems (New Radio, NR). NOMA may be based on linearly precoded superposition coding with a successive interference cancellation (SIC).

Recently, Rate Splitting Multiple Access (RSMA) has been studied. It is a multiple access scheme that enables a user messages to be split into common and private parts, after which the private parts are independently encoded into private streams while the common parts are jointly encoded into a common stream. The streams may then be precoded, superposed, and transmitted from a multi-antenna transmitter. On the receiver side, SIC is applied at each user receiving device to enable sequential decoding of the common streams and the private stream. Receiving devices then reconstruct the original messages by extracting the respective common part from the decoded common stream and combining it with the decoded private stream.

The RSMA has been considered as a strong and versatile multiple access technique in particular for downlink multi-antenna networks. RSMA may be seen as superior to SDMA and NOMA in some aspects. For example, SDMA works well when the user channels are not aligned. On the other hand, NOMA may be suited for aligned users. RSMA may work for both scenarios. Moreover, SDMA and NOMA do not work well under imperfect channel state information at the transmitter (CSIT), whereas RSMA is inherently robust to imperfect CSIT. Moreover, RSMA has a flexibility of adapting to the interference level instead of operating in two extremes of partially decoding the interference and partially treating it as a noise as in NOMA and SDMA, respectively.

Thus, RSMA may be suitable for employment in communication systems such as cellular systems (e.g. 4G, 5G, or further generations) or wireless local area networks (WLANs) or even for narrowband (NB) Internet of Things (IoT) applications. It may be desirable to further improve RSMA.

## SUMMARY

Methods and apparatuses are described herein for facilitating transmission and reception of wireless signals using a specific RSMA based on channel state information (CSI) which may enhance the reliability of the overall network while maintaining low latency.

The invention is defined by the independent claims. Some exemplary implementations are provided by the dependent claims.

For example, a data transmitting device is provided comprising: processing circuitry configured to: Obtain first data addressed to a first wireless device and second data addressed to a second wireless device different from the first wireless device; Generate a first redundancy version from the first data and a second redundancy version from the second data; Obtain common data as a separable combination of the first redundancy version and the second redundancy version; and Obtain encoded first data by forward error correction code, FEC, encoding, of the first data and obtain encoded second data by FEC encoding of the second data, and a transmitter configured to transmit a signal carrying the encoded first data, the encoded second data, and the common data at the same time on different beams.

The corresponding receiver, transmitting method, receiving method and programs ae also provided.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

## BRIEF DESCRIPTION OF DRAWINGS

An understanding of the nature and advantages of various embodiments may be realized by reference to the following figures.

FIG. 1    is a block diagram illustrating a communication system with a transmitter and a receiver.

FIG. 2    is a block diagram illustrating a communication system architecture using infrastructure and involving communication between a base station and a user equipment.

FIG. 3    is a block diagram illustrating a communication system with one base station communicating with four user equipments in downlink

FIG. 4 is a block diagram illustrating exemplary parts of a communication system processing chain at a data source and at a data destination.

FIG. 6 is a block diagram illustrating an exemplary transmitter and receiver applying a conventional RSMA.

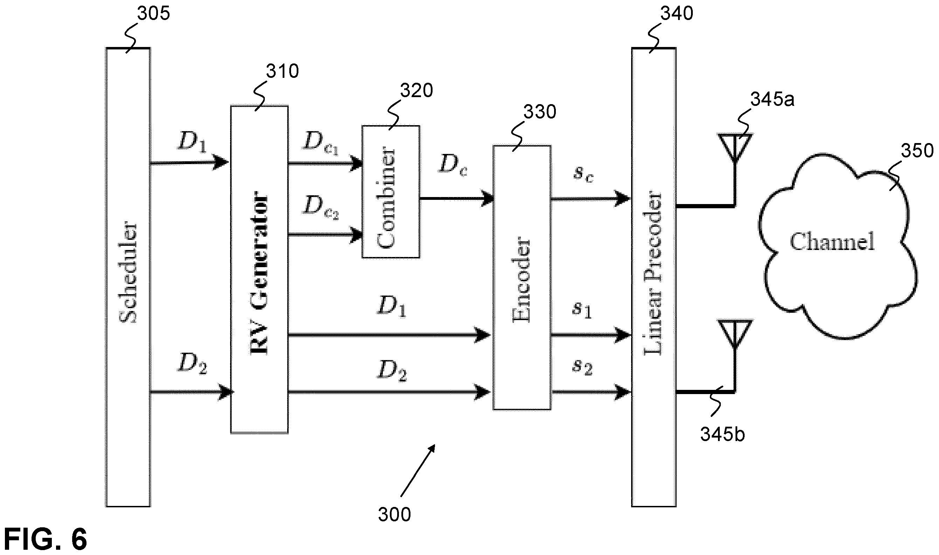

FIG. 6 is a block diagram illustrating an exemplary transmitter applying a redundancy version based RSMA.

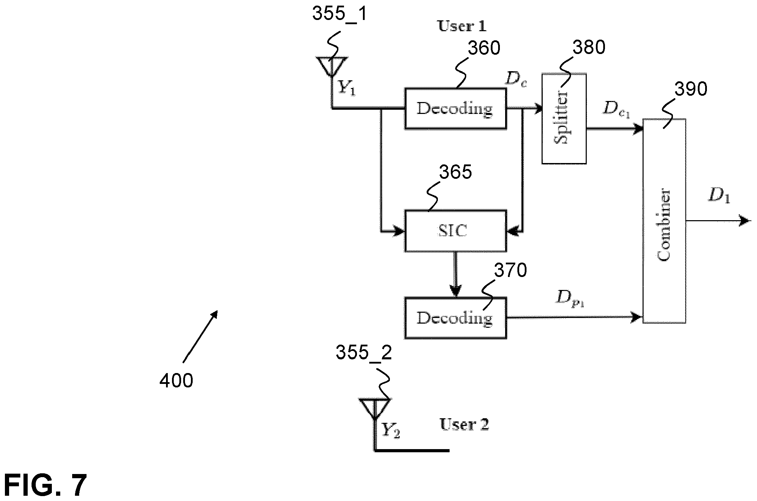

FIG. 7 is a block diagram illustrating an exemplary receiver applying a redundancy version based RSMA including SIC.

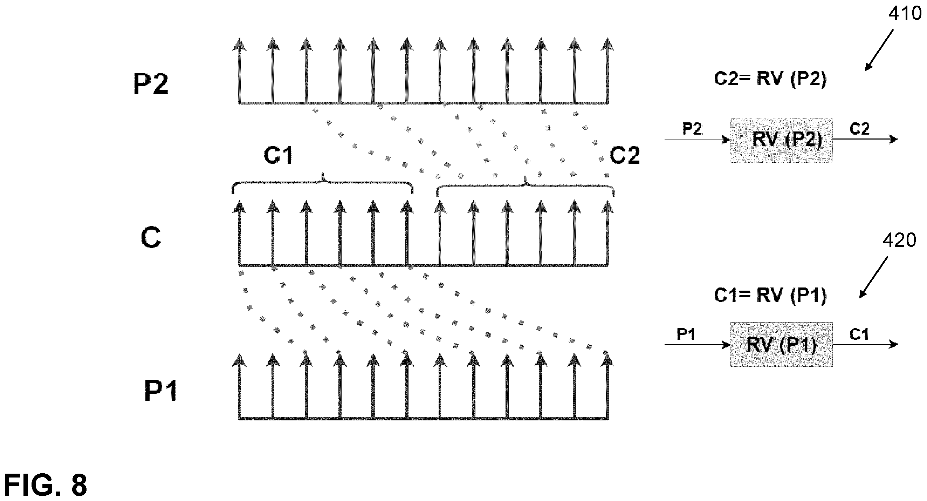

FIG. 8 is a schematic drawing illustrating exemplary private data and common data and their generation.

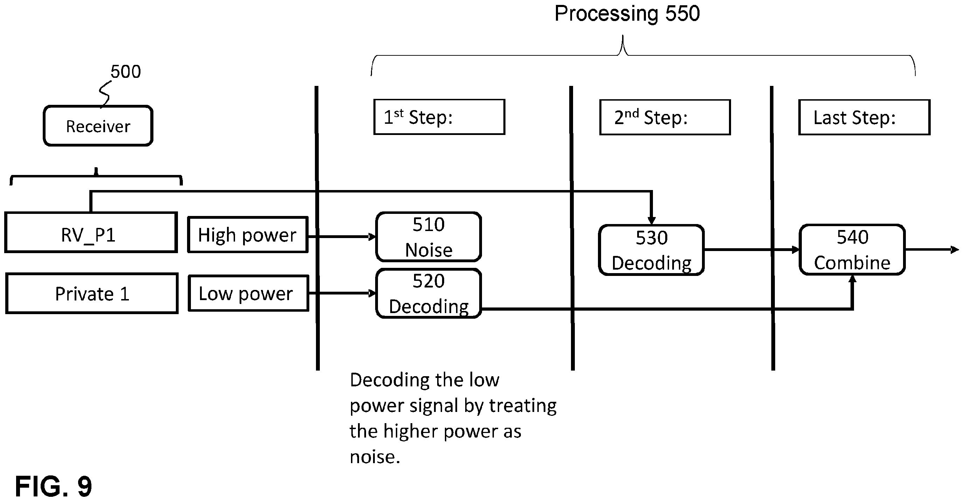

FIG. 9 is a schematic drawing illustrating an exemplary decoding without application of SIC.

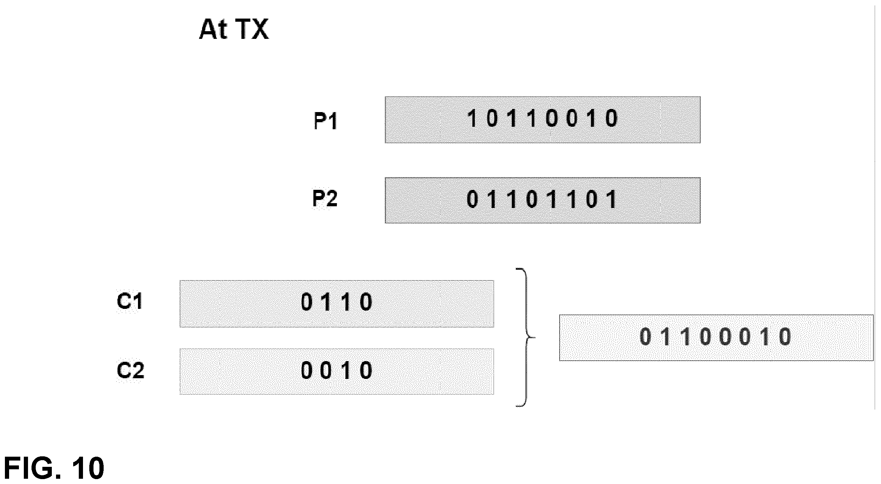

FIG. 10 is a schematic drawing illustrating a simple example of using parity code for generating common redundancy based data.

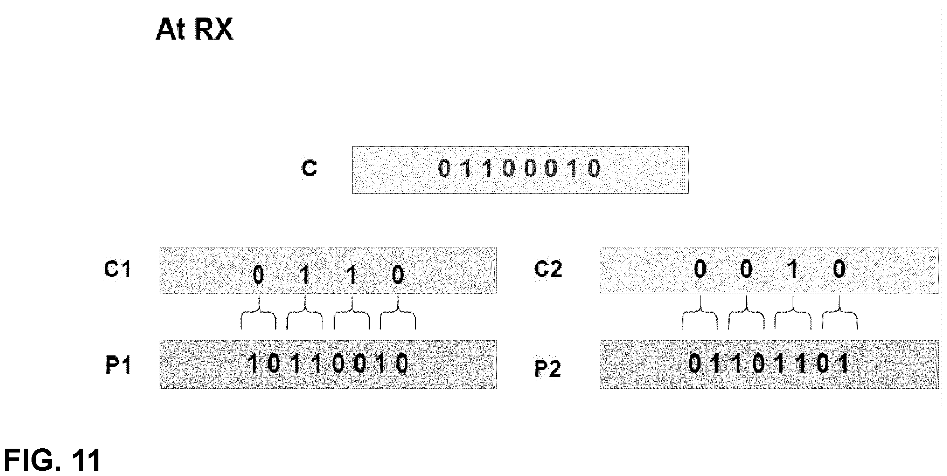

FIG. 11 is a schematic drawing illustrating a simple example of using parity code for successful decoding using common redundancy based data.

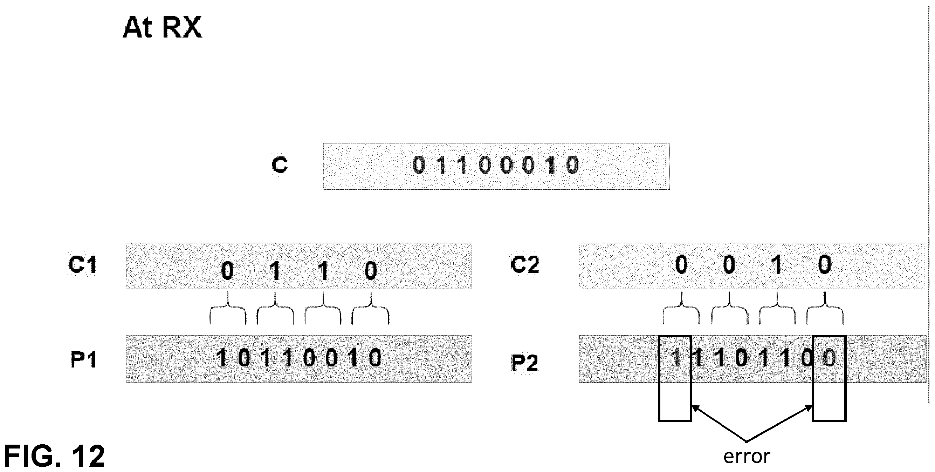

FIG. 12 is a schematic drawing illustrating a simple example of using parity code for unsuccessful decoding using common redundancy based data.

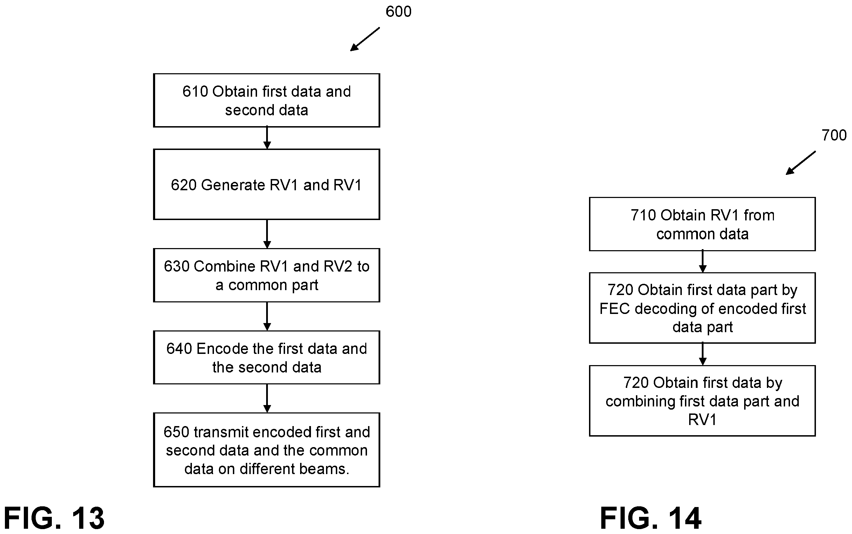

FIG. 13 is a flow diagram illustrating an exemplary method for data transmission.

FIG. 14 is a flow diagram illustrating an exemplary method for data reception.

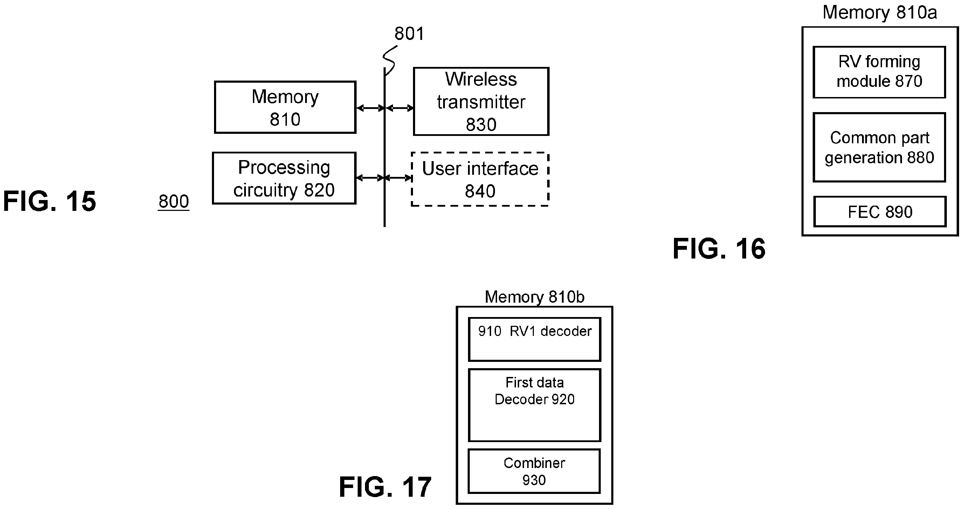

FIG. 15 is a block diagram illustrating a possible hardware structure of a data transmitting device and/or data receiving device.

FIG. 16 is a block diagram illustrating functional modules of the data transmitting device.

FIG. 17 is a block diagram illustrating functional modules of the data receiving device.

Like reference numbers and symbols in the various figures indicate like elements, in accordance with certain example implementations.

## DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

*Communication system*

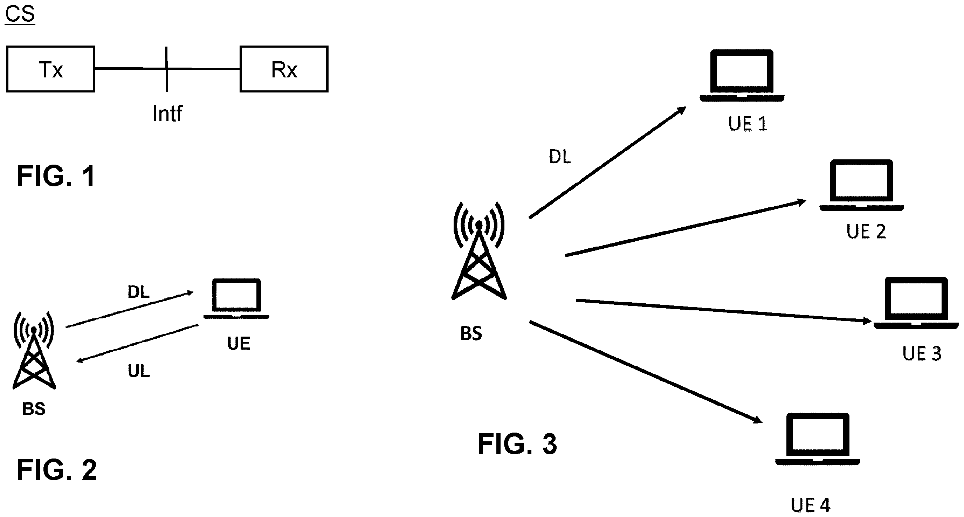

Fig. 1 illustrates exemplary components of a communication system CS in which Tx represents a transmitter and Rx represents a receiver. The transmitter Tx is capable of transmitting a signal to the receiver Rx over an interface Intf. The interface Intf may be, for instance, a wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11 be or the like.

Fig. 2 shows an exemplary wireless communication system such as an IEEE 802.11 based system or a 3GPP system such as 4G/5G or the like employing infrastructure. Such system includes a base station BS and a user equipment UE. The BS can be an access point (AP) of the IEEE 802.11 based system or a NodeB of the 3GPP system, such as an eNB of the 4G (LTE) or gNB of the 5G (NR) or the like. The UE may be any device such as mobile phone, laptop or tablet with the access to the wireless system, or even IoT machine-type devices or the like. The term UE is used mainly in the context of the 3GPP standards. However, in this disclosure, this term is also used for general user equipment in any system such as e.g. a STA in the IEEE 802.11 based systems. The present disclosure is not limited to any particular implementation of the BS and the UE. As illustrated in Fig. 2, the communication between the BS and the UE may include downlink (DL) and uplink (UL). The DL communication is from the BS to the UE. Accordingly, in this case, the BS corresponds to the transmitter Tx of Fig. 1 and the UE corresponds to the receiver Rx of Fig. 1. The UL communication is from the UE to the BS. The present disclosure is not limited to the infrastructure based communication and may be employed also in device to device communications (e.g. between two UEs or STAs), at sidelink.

Fig. 2 illustrates a communication system on the example of one BS and one UE. However, in general, one BS may communicate with a plurality of UEs in uplink and/or in downlink and possibly also with further BSs or other network infrastructure elements. Fig. 3 illustrates a specific example, in which the BS communicates in downlink (DL) with four UEs, UE1 to UE4.

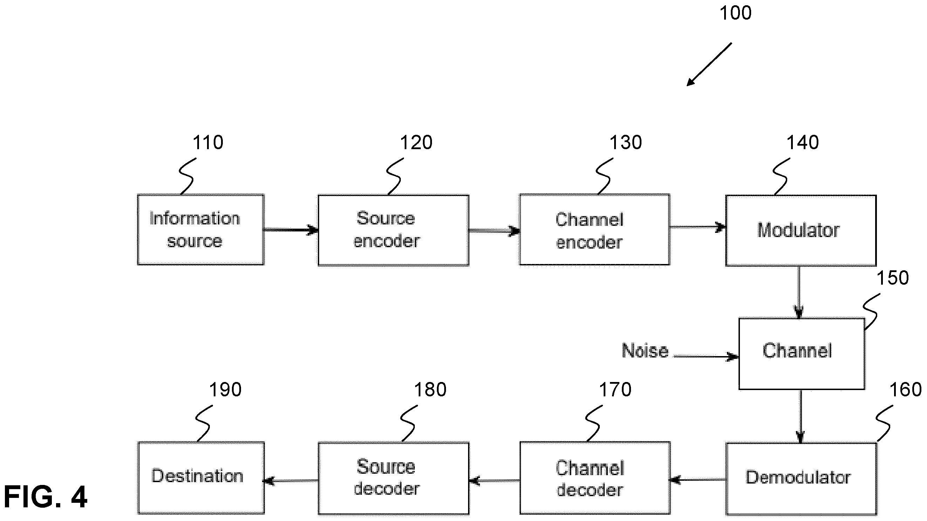

A more detailed, yet still a simplified block diagram of a digital communication system is depicted in Fig. 4. Blocks 110-140 belong to a transmitter side and may be implemented by the transmitter Tx of Fig. 1. Blocks 160-190 belong to a receiver side and may be implemented by the receiver Rx of Fig. 1. The transmitter and the receiver communicate with each other via a channel 150, which may add to the signal transmitted by the transmitter some noise. Information source 110 provides source data to be communicated to the receiving side. This may be raw data such as sensor data that may be e.g. AM audio signal, a video signal, image signal, text, measurement value(s) or the like. The source data may be compressed by the source encoder 120. The source encoder 120 may perform compression of the source data, such as lossy or lossless compression. The possibly compressed data are then passed to the channel encoder 130 that may perform various techniques such as FEC and ARQ or the like which facilitate robust transmission over the noisy channel 150. The channel coded data may then be modulated in a modulator 140 and transmitted over the channel 150, e.g. via one or more antennas. It is noted that the information source and the source encoder are typically not part of a communication system such as wireless communication interface. They are usually performed on the application layer and passed to the communication interface for transmission.

Correspondingly, the receiver side includes a demodulator 160 that demodulates the received signal (received e.g. over one or more antennas) and a channel decoder 170 which applies FEC decoding and/or implements receiver-side ARQ protocol and/or possibly other techniques. The source decoder 180 then de-compresses the source data, which are then used at the destination 190, e.g. displayed, used in further processing, played via loudspeaker, or the like.

The present disclosure mainly relates to the channel coder 130 and channel decoder 170.

Channel coding 130 is performed on data, that are typically referred to as information data (or information bits if the data is coded in units of bits rather than symbols), in such a way as to mitigate the negative effects of noise and interference incurred in the communications channel 150. This is achieved by FEC by adding redundancy, where some extra bits are included into the data to be transmitted in addition to the information bits for future error correction or error detection 170 at the receiver side. The capability of the demodulator 160 to restore the transmitted signals may be hampered by different channel factors including noise, interference, Doppler shift, multipath fading, etc. These factors result in demodulation errors and may hinder reliable communication. The purpose of a channel encoder 130 is, therefore, to facilitate a way to combat these errors caused by unfavorable channel conditions.

RSMA is one of promising candidates for sixth generation (6G) of communication systems and beyond networks to achieve a universal, flexible, robust, higher spectral-efficiency, and higher energy efficiency communication. One of the concerns in RSMA-based wireless communication networks is reliability. Several solutions have been proposed in the literature to cope with this issue, including short packet transmission or some specific Hybrid ARQ (HARQ) schemes. However, short packet transmission is mainly suitable for low-data rate applications. On the other hand, integration of HARQ with RSMA is not as straightforward as in other multiple access systems because of the message splitting and combing for each user in the network. It may also lead to an increase in latency in the network.

Numerous applications anticipated in 6G and beyond cannot handle large latency in order to achieve the reliability level that is targeted; for example non-terrestrial networks (NTNs), grant-free (GF), and ultra-reliable low latency communication (URLLC). In the case of NTNs, the distance between the satellite and the ground node is exceptionally large, making the use of re-transmission techniques such as HARQ impractical, as this would further increase the latency. Similarly, grant-free access scheduling methods do not use a feedback path, so any error that occurs cannot be addressed through retransmission protocols, which may result in significantly impacting reliability of system. Moreover, URLLC networks are delay sensitive and cannot tolerate large delays.

Embodiments of the present disclosure aim at addressing the above-mentioned issues and achieving a high reliability while providing low latency. In particular, the embodiments provide an approach for enhancing the reliability of a multi-carrier multi-user RSMA-based wireless network. This is based on exploiting the inherent structure of RSMA such that a private streams contain the data of the respective users, whereas the common stream contains the data of those subcarriers of the private streams that experience bad channel gains (e.g. deep fade channel). Accordingly, on the receiver side, the reliability of the data carried in the bad subcarriers may be improved by increasing the diversity.

The conventional RSMA enables user messages to be splitted into common and private parts, after which the private parts are independently encoded into private streams while the common parts are jointly encoded into common stream. The streams are then linearly precoded and superimposed on the top of each other and transmitted from the multi-antenna transmitter. On the receiver side, SIC is applied at each user to enable sequential decoding of the common streams and the intended private stream. Receivers then reconstruct the original messages by extracting the intended common part from the decoded common message and combining it with the decoded private message.

The trade-off between latency and reliability is still a challenge in wireless communication networks in general. The purpose of this innovation is to eliminate it, by increasing the reliability while decreasing the latency without the need for any retransmission procedure. Furthermore, this idea is applicable to any MU-MIMO network, not just RSMA networks. As an example, we considered the RSMA network.

*RSMA Conventional System Model*

For exemplary purposes, a multiple input multiple output (MIMO) single-cell downlink network is considered, with one base station to serve K users using RSMA as shown in Fig.1.

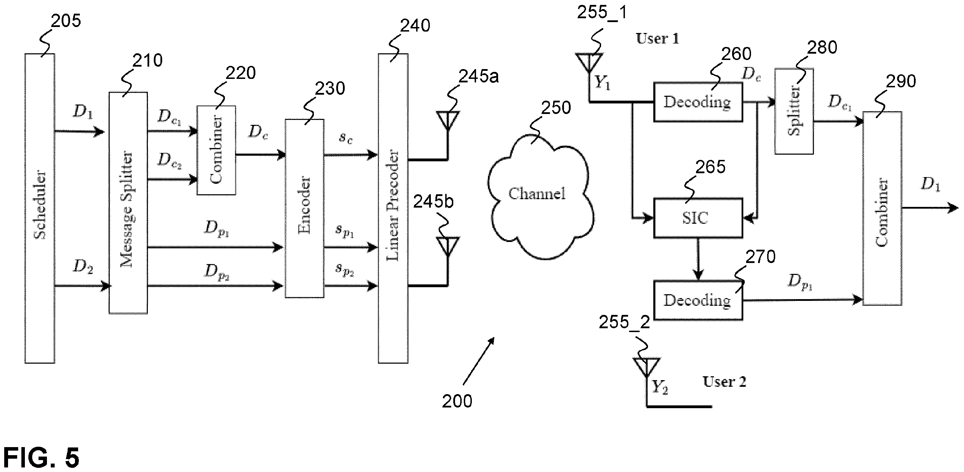

In an RSMA system 200, a transmitter side which may be a base station comprises a scheduler 205 that schedules for example K messages for respective K users, K being an integer larger than 1. A message $D_k$ is a message for the kth user, k running from 1 to K. In Fig. 5, K=2 and a message $D_1$ is for user 1 whereas a message $D_2$ is for user 2. The message $D_k$ of the kth user is split, by a message splitter 210 into a common part $D_{c,k}$ and a private part $D_{p,k}$. After that, the common parts of all users {$D_{c,1}, \ldots, D_{c,k}$} are combined by a combiner 220 into a combined message $D_c$. In Fig. 5, the common parts $D_{c1}$ and $D_{c2}$ of the first and the second user are combined. The combined message $D_c$ is then encoded, by an encoder 230 into the common stream $s_c$.

The private message parts {$D_{p,1}, \ldots, D_{p,k}$} are respectively encoded into private streams {$s_{p1}, \ldots, s_{pk}$}, as shown in Fig. 5. In the example of Fig. 5, the private message parts $D_{p1}$ and $D_{p2}$ of respective first and second user are encoded by the same encoder 230 into the streams $s_{p1}$ and $s_{p2}$. Then, common and private data streams may be denoted together as s = [$s_c, s_{p1}, \ldots, s_{pk}$]$^T$ $\in C^{K+1}$ ("T" representing transposing operation), and are linearly precoded, by the linear precoder 240, before transmission and using the precoder P = [$p_c, p_1, \ldots, p_K$], where $p_c, p_k \in C^{Nt}$ are the precoders of the common stream $s_c$ and private streams $s_{p1}$ to $s_{pK}$, respectively. We denote the power of the common stream $s_c$ as $P_c = \|p_c\|_2$. Therefore, the transmitted signal of the kth user can be given as

$$s_k = \sqrt{p_c}s_c + \sum_{k=1}^{K} \sqrt{p_k}s_{p_k}, \forall k \in K,$$

where $p_k$ is the transmit power of private stream, $s_{pk}$, for kth user. The linearly precoded signal is then transmitted over a channel 250 by multiple antennas; in Fig. 5 two antennas 245a and 245b are illustrated. User 1 and user 2 are illustrated in Fig. 5 as having respectively one antenna 255_1 and 255_2. However, in general, the users may also have more than one antennas. A receiver of User 1 is illustrated in detail. A receiver of User 2 may have a similar structure and is not further illustrated in Fig. 5.

The received signal at kth user consists of four parts as shown below:

$$y_k = h_k^H s_c + h_k^H s_{pk} + \sum_{j=1, j \neq k}^{K} h_k^H s_{pj} + n_k,$$

where $h_k \in C^{Nt \times 1}$ is the channel gain from the base station (BS) to kth user. In this model it is assumed to be perfectly known at the BS, it may be known for instance from the feedback the users may send to the BS or based on another estimation technique. $n_k$ is the additive white Gaussian noise (AWGN) at kth user, having a zero-mean and a variance $\sigma_k^2$ and it is represented as $n_k \sim \mathcal{N}(0, \sigma^2)$.

The received signal at User 1 consists of four parts as the above equation implies; common part, $s_c$, has typically higher power compared with other parts, private part, $s_{p1}$, has typically more power compared with the remaining parts, the multi-user interference part, $s_{pj}$, has typically more power compared with the noise part and this part is considered as noise in the detection process, and the last part is the noise, $n_1$. The common stream $s_c$ is decoded first in a decoder 260 and then a splitter 280 splits the decoded portion common part $D_c$ to extract the portion $D_{c1}$ of the common part directed to User 1. In order to decode the private stream $s_{p1}$, successive interference cancellation (SIC) 265 is applied between the received signal, $Y_1$, and $D_c$ to remove the larger interference (of the common part) on the private part, and the result is decoded in a decoder 270, thereby obtaining decoded private message part $D_{p1}$. The decoded message part $D_{p1}$ is then combined with the portion $D_{c1}$ of the common part directed to User 1 to obtain

the decoded message $D_1$ for User 1. Note that the interference from the other private users (in this example it is User 2 and in particular signal $y_2$ of User 2) is considered as a noise.

It is noted that Fig. 5 illustrates a simplified basic RSMA System model (transmitter and receiver) 200. The above system model 200 can be scalable to more than two user cases, the two-user assumption is just for explanation. Moreover, there may be further components of the processing chain including modulation or the like.

### RSMA with enhanced resilience and low delay

The present disclosure makes use of a basic RSMA structure, by splitting the user message into two parts, common and private, independently. The aim is to exploit the common part of the RSMA structure to facilitate a joint coding design of the common and private part. Thereby increasing of the reliability and reducing the latency without using any retransmissions may be possible. In particular, entire data of a specific user are included into a private stream and a supporting version (SV) or redundancy version (RV) generated based on this data is inserted into the common stream. This redundancy version can be any supporting data like parity bits, cyclic redundancy check (CRC) bits, punctured bits, or any coding bits.

In this way, a correlation between the common and private streams is established. Correspondingly, reliability can be enhanced without introducing any additional delay into the system (e.g. delay of the HARQ). Thus, delay-sensible applications such as NTNs, URLLC, and grant-free networks can be improved.

An exemplary transmitter 300 is shown in Fig. 6 and a corresponding exemplary receiver 400 is shown in Fig. 7.

### Transmitter side

Fig. 6 shows a data transmitter 300 that may be implemented by a processing circuitry and a transceiver. The processing circuitry may implement further functional blocks. In particular the processing circuitry may be configured to obtain first data D1 addressed to a first wireless device (e.g. UE1 as shown in Fig. 3) and second data D2 addressed to a second wireless device (e.g. UE2 as shown in Fig. 3) different from the first wireless device. In other words, data D1 and D2 are obtained for a multi-user transmission. In the example of Fig. 6, the first data D1 and the second data D2 are obtained from a scheduler 305. For example, the scheduler obtains user data (payload or signaling) from higher layers and schedules them for transmission. The data scheduled for transmission are provided to the transmitter's lower layers for transmission.

The processing circuitry is further configured to generate a first redundancy version from the first data and a second redundancy version from the second data.

This is illustrated in Fig. 6 by RV generator 310, which generates the first redundancy version (RV1, also denoted as Dc1) and the second redundancy version (RV2, also denoted as Dc2).

The processing circuitry is further configured to obtain common data Dc as a separable combination of the first redundancy version Dc1 and the second redundancy version Dc2, as shown in Fig. 6 by way of a combiner 320. The combiner may combine the two redundancy versions in any separable way, such as concatenation or interleaving or the like.

The processing circuitry is further configured to obtain encoded first data s1 by forward error correction code, FEC, encoding 330, of the first data D1 and obtain encoded second data s2 by FEC encoding 330 of the second data D2. The FEC encoder 330 may be any kind of encoding such as LDPC, Turbo, convolutional, Polar or the like. The common part Dc may, but does not need to be encoded by the FEC 330 into encoded common part sc. Fig. 6 illustrates an example, where the FEC coding 330 is applied to the common part.

It is noted that although one FEC Encoder 330 is shown in Fig. 6, in general, separate FEC encoders, e.g. capable of working in parallel, may be provided. The FEC encoders may apply the same encoding which may provide the advantage of an easier physical layer combining. However, the present disclosure is in general not limited thereto and it is conceivable to provide different encoding for the common data and the private data.

The transceiver is configured to transmit a signal carrying the encoded first data s1, the encoded second data s2, and the common data Dc (or encoded common data sc) at the same time on different beams. The beamforming is illustrated in Fig. 6 by linear precoder 340. According to an exemplary implementation, the processing circuitry may further be configured to obtaining encoded common data sc by FEC encoding the common data Dc, wherein the transmission signal then carries the common data Dc as the encoded common data sc.

For example, the generating of the first redundancy version and/or the second redundancy version is generated as parity bits, cyclic redundancy check, FEC bits, punctured bits or based on compressing sensing signal.

Compressing sensing is a known approach to perform compression for the data communication. It has the capability to provide a small size of data that represents a larger amount of information. And it has the ability to recover this data again. Tus, compressing sensing based redundancy version may increase efficiency.

The transmission over a wireless channel 350 may be performed over antennas 345a and 345b illustrated in Fig. 6. It is noted that Fig. 6 merely exemplarily shows two antennas at the transmitter. However, in general, a plurality of antennas may be provided and used for the transmission. Moreover, the antennas may, but do not need to be a part of the transmitter. Antennas may be connectable to ports of a transmitter and be thus extern to the transmitter.

In an advantageous implementation, the common data is transmitted with a power (or, in general a target signal to noise ratio, SNR) different from the power (or target SNR) with which the first data and the second data are transmitted. The target SNR is an SNR targeted at the receiver. For example, transmitter may estimate channel for instance based on feedback from receiver or the like, and thus select power and/or other link adaption mechanisms (such as modulation and coding rate or the like) to meet the target SNR at the receiver. The target SNR may be given by the application/service Quality of Service requirements that may be known to both transmitter and receiver (e.g. configured by higher layers).

For example, the common data is transmitted with a higher power than the first data and the second data. In other words, the transceiver may be configured to transmit a signal of the first user carrying the encoded first data, and the common data at the same time with different power levels of the first spatial direction of the first user. Similarly, for user 2, the transceiver may be configured to transmit a signal of the second user carrying the encoded second data, and the common data at the same time with different power levels of the second spatial direction of the second user. This is extendable in the same way for more than two users.

The above configuration may be achieved by the transceiver configured to transmit a signal of the first user carrying the encoded first data in the spatial direction of the first user along with the common data that is broadcasted at the same time with different power levels. The broadcasting with higher power (different from the power of the first data) facilitates that the common data may be received by all users, irrespectively of their respective locations / signal quality.

In some implementations, the power levels for first and second data parts may be equal while the power of common data may be higher. However, the present disclosure is not limited thereto and the transmitter may also select different powers for data of different users depending on the required quality of priority of the service requested by these users (UEs such as those illustrated in Fig. 3).

As shown in Fig. 6, the redundancy version generator (RV generator) 310 is used instead of splitter 210 as in conventional RSMA (see Fig. 5 for comparison). This redundancy generator 310 generates redundancy packets by applying a channel coding technique or another technique to the original packet (LDPC codes, polar codes, parity codes, puncturing of any of a FEC code, or the like). The redundancy packets contains redundant information, which can be used by the receiver to correct errors and increase the received signal reliability. Channel coding schemes depend on factors such as the desired level of error correction capability, implementation complexity, and the characteristics of the communication system. To create the redundancy version of the data or the supportive data to be included in the common stream, some specific and non-limiting exemplary channel coding methods that can be used are as follows:

- Low density Parity Check (LDPC) codes and Turbo codes where they are commonly used in modern wireless communication standards like 4G LTE and 5G.
- Convolutional codes where they are widely used in applications with lower coding complexity is desired.
- Block codes such as Hamming codes and Reed-Muller codes. Hamming codes are commonly used for error detection and correction in computer memory systems.
- It can also be the compressed sensing version which is represented by taking the FFT or DFT of the private data or any other transformation.

The RV generator 310 basically inserts the entire data of each user D1, D2 into the private stream s1, s2, and inserts the redundancy version Dc1, Dc2 (or supporting version) in common stream Dc or sc. The supporting data can be in form of parity bits, CRC bits, coding bits and punctured bits. The RV generator 310 in the example of Fig. 6 outputs four streams Dc1, Dc2, D1, and D2, out of which two of them (D1, D2) directly go to encoder and two of them (Dc1, Dc2) are combined 320 before encoding 330. The combined stream sc is a common stream while the other two independent streams s1, s2 are private streams. After encoding, the streams are linearly precoded 340 and superimposed on the top of each other to be transmitted over a possibly frequency selective channel 350.

Fig. 8 shows schematically data portions P1 and P2 that represent the private data (portions of D1 and D2 in Fig. 6) of user 1 and user 2. Data C represents the common data of both users correlated with the data portions P1 and P2. Data C contains the redundant or supporting version corresponding to private streams P1 and P2 for each user where the common data is present in a concatenated form.

In other words, C1 and C2 are the RV of P1 and RV of P2 respectively, where this RV can be parity bits, CRC, coding bits, punctured bits or it can be a compressed sensing version. Providing such redundant data that has some correlation or dependency with the original message at the same time of the first transmission, may reduce the latency of the overall network and increase the reliability dramatically. By exploiting the common stream which is the broadcast transmission to send a redundant version for each user in the system without asking or even waiting for a retransmission, the latency is decreased. Moreover, combining this redundant data with the transmission itself will increase the reliability of the data.

In Fig. 8, the dotted lines and schematic block diagrams 410, 420 illustrate that the common data C1 is generated from (and thus correlated with) the private data portion P1 of user 1; and that common data C2 is generated from (and thus correlated with) the private data portion P2 of user 2.

*Receiver side*

As mentioned above, Fig. 7 shows an exemplary receiver side. In particular, a data receiving device 400 is provided that comprises a transceiver (including at least at least a receiver) and processing circuitry (that may implement several functional modules shown in Fig. 7).

The receiver is configured to receive a signal Y1 (looking at user 1, the receiver of user 2 may work similarly for signal Y2) carrying encoded first data, encoded second data, and common data at the same time on different beams. The reception may be performed via antenna 355_1 (user 2 received signal Y2 over antenna 355_2). Fig. 7 shows a single antenna, which may be the case. However, the present disclosure is not limited thereto and any user can have one or more antennas for reception of the signal.

The processing circuitry is configured to obtain a first redundancy version from the common data which is a separable combination of the first redundancy data and a second redundancy version (the second redundancy version pertaining to data addressed to another data receiving device, i.e. to another UE). The processing circuitry is further configured to obtain first data by forward error correction, FEC, decoding of the encoded first data and based on the first redundancy data.

In Fig. 7, the FEC decoding is illustrated by decoder 360 applied to the common data, in case the common data is also received encoded. Such encoding of the common data is an advantageous implementation of the present disclosure, but is not mandatory. The FEC decoding is further illustrated by FEC decoding 370 applied to the private data (first encoded data).

The obtaining of the first redundancy data Dc1 may be performed by splitter 380. In particular, the splitter 380 separates the concatenated data Dc (or de-interleaves the interleaved data) including redundancy versions of a plurality of users and only maintains the data directed to the user operating said data receiving device 400.

The common data may be transmitted with a higher signal to noise ratio than the first data and the common data are carried in the signal as encoded common data, as also already discussed for the transmitter side. It is noted that the power and/or SNR settings and/or coding settings discussed above for the transmitter side apply correspondingly for the receiver side.

It is noted that the receiver implementations discussed in the following are only exemplary and the present invention is not limited to any specific implementation. For example, a data receiving device may have an architecture:

1. With a successive interference cancellation, SIC unit, or
2. With a SIC unit.

In the architecture *with* the SIC unit, the processing circuitry may be configured to obtain an estimation Dp1 of first data by FEC decoding 370 the encoded first data by considering the common data as noise. This is performed by estimating the noise corresponding to the common data in the SIC 365. The processing circuitry may be further configured to obtain the common data Dc by FEC decoding 360 the encoded common data. The processing circuitry may be further configured to obtain the first data D1 by combining 390 the estimation of first data Dp1 and the common data Dc1. Here, the common data that is combined with the estimation of the first data is the first redundancy data that corresponds (is correlated) to the (estimated) first data as was explained above for the transmitter side.

For example, the processing circuitry is further configured to apply Successive Interference Cancellation (SIC) based on the decoding of the common data and the received signal; and obtain the first data by combining the output of the SIC and the common data.

This approach is thus similar as that of the conventional RSMA reception. As explained above, the superimposed message Y1 is received by user 1 as a signal from the wireless channel 350. Since the common stream may have a higher power, it is decoded 360 as first. This implementation with SIC is particularly suitable to interact with transmitters that apply higher power to the common data transmission (compared to the first data transmission). This facilitates decoding of the private stream even though the common stream is interfering with the private stream. After decoding 360, the SIC 365 is applied to decode the respective private stream of the receiving user. By doing so, the two parts (common and private) that are for the receiving user can be combined 390.

While transmitting the common part with higher power and thus decoding at first the common part to cancel its interference from the private data signal is advantageous, the present disclosure is not limited to this approach. In particular, as mentioned above, the power setting of higher power for common part is not mandatory. Moreover, is conceivable to apply SIC to the private portion of signal (by decoding the private portion first and consider it as noise for the common portion) and decode the common portion after SIC.

To remove the interference, the SIC 365 is applied to the common part. Based on SIC 365, a channel state information availability is assumed to be available to the receiver (the noise caused by the common part transmission can be cancelled). This assumption means there is no residual interference from the common stream signal on the private stream signal.

The receiver of Fig. 7 is somewhat similar to that of Fig. 5. However, the content of the common stream is different and thus also the processing (in particular the combining 390). The combiner 390 in this case can be one of the bit level combiners that exist in literature which can be one of the following. Maximum aposteriori probability (MAP), Log Likelihood Ratio (LLR), Maximum Likelihood Ratio (MLR), Bahl, Cocke, Jelinek, and Raviv (BCJR) algorithm, Soft output Viterbi algorithm (SOVA), Soft Input Soft Output (SISO) decoder. Any of these can be applied at the receiver 400 to perform the combining between the common Dc1 and the private Dp1 streams for each user (at each receiver) in the network.

As mentioned above, application of SIC is possible and may further improve reception, but it is not necessary with the present disclosure. In particular, the RSMA approach suggested herewith may enable a simple receiver construction possible even without SIC.

Since the data in common stream and private stream is correlated, there is another possibility to decode the data without using the SIC unit 365 at the receiver.

Such approach is schematically represented in Fig. 9. The receiver 500 receives a signal. The signal has two components RV_P1 (redundancy data within the common part) and P1 (private portion corresponding to the first data encoded and distorted by the channel 350). Transmission power of RV_P1 is higher than transmission power of P1. It is thus likely that the reception power of RV_P1 is higher than reception power of P1. Then the received signal is processed 550.

A first step is to decode 520 the lower power component P1 which carries the private stream by considering the higher power component (common stream including RV_P1) as noise 510. The first step is taken under the design paradigm of using a strong channel coding approach to be able to recover 520 the data if it is corrupted by the noise 510. However, it is noted that the wireless channel may vary so that this may not be true all the time.

After the first step, the receiver processing 550 decodes 530 the higher power components which is the common stream including RV_P1.

Finally, the last (third) step combines 540 both the decoded RV_P1 from the common stream and the P1 to get the entire data of the user. The same kind of algorithms to do the combining will be used which are MAP, Log Likelihood Ratio (LLR), MLR, Bahl, Cocke, Jelinek, and Raviv (BCJR) algorithm, and soft output Viterbi algorithm (SOVA), Soft Input Soft Output (SISO) decoder, or the like. This approach to reception has low complexity and it eliminates the need for an SIC unit 365 which makes it more easy to implement. However, it may need a stronger FEC coding than the approach applying SIC. Both approaches are suitable and may be deployed depending on the remaining design and requirements of the system or receiver implementation. The choice of the receiver may be also based on the users' preferences and its capability to manage the complexity of the channel coding and the complexity of applying the SIC unit at the receiver.

It is noted that the present disclosure is particularly suitable for downlink. In the uplink, it may be more difficult on the users to generate the common data as the common data contains data from all users. However, in principle, the approaches above are in principle also applicable to uplink, if the UEs can be coordinated (controlled) appropriately. For example, such data transmitting device for uplink transmission may also comprise a processing circuitry and a transceiver. The processing circuitry may be configured to: obtain first data; generate a first redundancy version from the first data; obtain a scheduling information; and obtain encoded first data by forward error correction code, FEC, encoding, of the first data. The transceiver is configured to transmit, according to the scheduling information, a signal carrying the encoded first data and the first redundancy version, the first redundancy being carried within common data and separable from other data included in the common data, wherein the signal carries the first data and the common data at the same time on different beams. In other word, in uplink, a scheduler (such as AP or BS or another STA/UE) would coordinate and schedule the uplink transmission.

In the following, a simple example is provided illustrating schematically transmission of data to a plurality of users. This example refers to Figs. 10 to 12. In particular, Figs. 10 to 12 illustrate an example of transmitter design of proposed algorithm with parity check under perfect CSI.

Consider a scenario involving two users, to which data are to be sent. The first user needs to be sent the following data bits {10110010} which are represented by P1 in Fig. 10. The second user needs to be sent the following data bits {01101101} which are represented by P2 as shown in Fig. 10. The common stream incorporates parity bits C1 and C2 derived from the individual users' private streams. In the present example, the common stream {01100010} is formed by concatenation of C1 and C2.

As illustrated in Fig. 10, an odd parity scheme is employed and the private data stream P1 is divided into groups of two bits (bit pairs are formed sequentially within P1). In context of odd parity, if a pair of bits results in an even combination (XOR), we introduce a 1 bit to make it odd, and conversely, if the combination is already odd, a 0 bit is appended to maintain odd parity. However, it is noted that the approach may be reversed.

For example, the first P1 bit pair 10 is odd (1 xor 0 = 1), so that no modification is necessary and the first bit of C1 is 0. The second P1 bit pair 11 is even (1 xor 1 = 0), so that a modification is necessary and the second bit of C1 is 1. In the same manner the third and fourth bits of C1 are obtained. The same handling is performed to obtain C2 from P2.

Fig. 11 shows an operation on the receiver side (receiver 1 to the right and receiver 2 to the left). Upon reception, the common stream C is initially divided into two distinct segments (as a counterpart of concatenation, i.e. splitting 380), each corresponding to a particular user.

Therefore, the common part of the first user is represented by {0110} and the common part for the second user is shown as {0010}. Then, the parity can be checked. In particular, C1 may be formed from the received P1 and compared to the first four bits of C. Similarly, C2 may be formed from the received P2 and compared to the last four bits of C. In this example of Fig. 11, there were no errors and the check is positive the decoding was correct.

In cases where perfect CSI is available (or nearly perfect as may be achieved e.g. by SIC or the like), the likelihood of encountering errors is considerably reduced. However, in scenarios where the CSI is imperfect, errors may occur. For the sake of demonstration, let's assume that there are errors in the first and last bits of the second user's private stream as shown in Fig. 12. The first bit has flipped from 0 to 1, and the last bit has transitioned from 1 to 0. It is noteworthy that these errors are detectable through the parity check. For example, the first bit pair of P2 would become even (1 xor 1 = 0) and thus, the first bit of C2 would be expected to be 1. However, as shown in Fig. 12, the first bit of C2 as received is 0. Accordingly, an error is detected. Similar effect is observed for the last bit of C2 composed of last bit pair of P2.

The above example is a very simple parity code for illustrational purposes. However, other codes possibly with a higher coding rate or the like. Employing soft combining techniques and probabilistic methods that depend on the way of combining, it is possible to even correct these errors. These combining approaches are available in the literature, they can be used based on the user requirements and demands. One more time, these combining approaches are MAP, Log Likelihood Ratio (LLR), MLR, Bahl, Cocke, Jelinek, and Raviv (BCJR) algorithm, and soft output Viterbi algorithm, Soft Input Soft Output (SISO) decoder. It is worth mentioning that each algorithm has its approach to decide which bit is in error or not based on the probability of each transmitted bit. As a result, the reliability of each user data is increased where the latency of the overall network is decreased by applying such an approach.

In this disclosure, a redundancy approach based multi-user MIMO networks is provided to enhance reliability and to reduce the latency without the need for requesting any retransmission of the data again and again. Some of the effects and advantages of this disclosure are as follows. There is no need to use feedback or even adopt a retransmission protocol with the present disclosure. Since no retransmission/feedback method needs to be used, the latency of the overall system would be low. However, it is noted that the present disclosure does not exclude the possibility of using ARQ or HARQ in the same layer or other layers. Still, the present disclosure may help reducing number of retransmissions, if used together with an ARQ or HARQ. Thus, latency lay still be reduced.

Second, applying such an approach may enhance the reliability of the user data at the same time of transmission without waiting for feedback about the data's status, which may be improved with the common stream that carries the RV/SV with higher power. This might increase the likelihood of receiving common data with low error rates.

Third, the present disclosure is suitable for NTNs and GF approaches since no feedback is required while HARQ was problematic in such networks. It is also highly compatible for URLLC networks where low latency is the main requirement.

Fourth, the present disclosure implicitly provides some level of security despite sending private data in common because the data in the common part will not have any immediate meaning to an eavesdropper since it is selected based on the corresponding user coding approach.

Fifth, the present disclosure can achieve the QoS based on the user requirements. If a particular user has high requirement of reliability, the BS can use a good channel coding to create the redundancy to overcome the error at the receiver side.

Sixth, in retransmission approaches, if the packet is not received correctly at the receiver in the state of the art, a whole packet is typically sent again that may exhaust more resources. In the present disclosure, a redundancy version of the data is transmitted at the same time of sending the data itself to reduce the need to use feedback or any retransmission protocol at all.

Finally, the present disclosure may provide some versatility to the network in terms of reception, for example the conventional structure of RSMA using the SIC approach. In addition to that, a new reception approach could be used where there is no need to use SIC by taking the help of soft decoding approaches like MAP, Log Likelihood Ratio (LLR), MLR, Bahl, Cocke, Jelinek, and Raviv (BCJR) algorithm, and soft output Viterbi algorithm, Soft Input Soft Output (SISO) decoder as indicated above.

The present disclosure may be implemented on MAC, in particular, the splitting of the data and/or the generation of RVs may be performed on MAC and the FEC encoding on physical layer. However, the present disclosure is not limited to MAC implementation and it may be implemented on physical layer. Splitting and/or RV generation could be also performed on a layer higher than MAC.

Reliability and low latency, those key performance indicators (KPI)s, always have a trade-off relationship in wireless communication networks to achieve. This present disclosure is aimed at providing a mechanism/approach to increase reliability and reduce latency under multi-user MIMO wireless networks, simultaneously. It may be used in any wireless network that uses a multi-access MIMO approach to serving multi-users in the network. Examples of possible deployment and areas that can be improved by the present disclosure include link adaption and modulation, channel estimation and detection, enhanced throughput and reliability mechanisms, MAC layer management and specifications, non-orthogonal unicast and multicast transmission (NOUM), Multi-cell MIMO including coordinated multi-point (CoMP), cloud-radio access network (C-RAN), and fog-radio access network (F-RAN), Cooperative user relaying networks, efficient precoding design aspects, joint Radar and communication (JRC) applications, massive MIMO-Networks, Ultra-reliable and low-latency communications (URLLC), millimeter-wave (mmWave) communication, unmanned aerial vehicles-aided communications (UAV), physical layer security (PLS), Massive machine-type communication (mMTC), Cognitive radio networks (CRN), and Device to device Communication (D2D) or the like.

*Implementations in software and hardware*

It is noted that although embodiments and examples of the present disclosure were provided in terms of an apparatus above, the corresponding methods providing the functionality described by the devices are also provided. Moreover, it is noted that any of the steps described above may be included as code instructions in a program, which may be executed by one or more processors and these steps may correspond to steps of a method.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

An exemplary transmitter method 600 is shown in Fig. 13. In particular, the data transmitting method 600 comprises the steps of:

- obtaining 610 first data addressed to a first wireless device and second data addressed to a second wireless device different from the first wireless device;
- generating 620 a first redundancy version from the first data and a second redundancy version from the second data;
- obtaining 630 common data as a separable combination of the first redundancy version and the second redundancy version;
- obtaining 640 encoded first data by forward error correction code, FEC, encoding, of the first data and obtain encoded second data by FEC encoding of the second data; and
- transmitting 650 a signal carrying the encoded first data, the encoded second data, and the common data at the same time on different beams.

The above steps have been explained above with reference to Fig. 6, including optional features, exemplary implementations, and possible enhancements.

An exemplary data receiving method is shown in Fig. 14. The method 700 comprises the following steps:

- receiving 710 a signal carrying encoded first data, encoded second data, and common data at the same time on different beams;
- obtaining 720 a first redundancy version from the common data which is a separable combination of the first redundancy version and a second redundancy version; and
- obtaining 730 first data by forward error correction, FEC, decoding of the encoded first data and based on the first redundancy data.

The above steps have been explained above with reference to Fig. 7, including optional features, exemplary implementations, and possible enhancements.

While Figs. 6 and 7 provide an example of functional and/or hardware modules that may implement the transmitter and receiver according to the present disclosure, the present disclosure is not limited to such implementation.

As mentioned above and as shown in Fig. 15, the data transmitting device of the present disclosure may comprise the processing circuitry 820 and a wireless transceiver 830 (e.g. transmitter). The processing circuitry may be implemented by one or more processors. However, it is noted that the processing circuitry is not limited thereto and it may include any general or application specific hardware components, including FPGAs, ASICs, and possibly further electronics. A memory 810 (810a at the transmitter) may store program code that includes instructions causing (at least part of) the processing circuitry to perform the above mentioned methods. The processing circuitry 820 and the memory 810 (possibly also the transceiver 830) may communicate over a bus or a system of buses 801. The data transmitting device may further comprise a user interface 840 enabling a user input (e.g. by providing a keyboard, touch screen, microphone, or the like) and/or user output (e.g. audio output, display, or the like).

The same architecture, including the processing circuitry 820, memory 810, transceiver 820, and possibly user interface 840 may be included in the data reducing device described above. However, these devices may differ by the program modules stored in the memory 810 and executed at the transmitter and the receiver. An exemplary transmitter memory module 810a is shown in Fig. 16 and exemplary transmitter memory module 810b is shown in Fig. 17.

The transmitter memory 810a includes an RV forming module 870 for creating RV versions based on respective user data. The transmitter memory 810a includes further a common part generating module 880 (corresponding to function of the combiner 320) and a FEC coding module 890 (corresponding to function of the encoder 330) which have already been functionally described above.

The receiver memory 810b includes a RV decoder module 910 for extracting RV from the common stream and possible for decoding it. A part of this module may be the SIC mentioned above. The receiver memory 810b includes further a first data decoder 920 and a combiner 930 which may correspond to the decoder 370 and the combiner 390 of Fig. 7, respectively, in function.

As mentioned, antennas may, but do not have to be a part of the transmitter and/or the receiver.

The above examples are not to limit the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

According to a first aspect, a data transmitting device is provided, comprising: processing circuitry configured to: Obtain first data addressed to a first wireless device and second data addressed to a second wireless device different from the first wireless device; Generate a first redundancy version from the first data and a second redundancy version from the second data; Obtain common data as a separable combination of the first redundancy version and the second redundancy version; and Obtain encoded first data by forward error correction code, FEC, encoding, of the first data and obtain encoded second data by FEC encoding of the second data, and a transmitter configured to transmit a signal carrying the encoded first data, the encoded second data, and the common data at the same time on different beams.

According to a second aspect, further to the first aspect, the processing circuitry is configured to obtaining encoded common data by FEC encoding the common data, wherein said signal carries the common data as the encoded common data.

According to a third aspect, further to the first aspect or the second aspect, the generating of the first redundancy version and/or the second redundancy version is generated as parity bits, cyclic redundancy check, FEC bits, punctured bits or based on compressing sensing signal.

According to the fourth aspect, further to any of the first to third aspects, the separable combination is a concatenation.

According to a fifth aspect, further to any of the first to fourth aspects, the common data is transmitted with a signal to noise ratio, target SNR, higher than the target SNR with which the first data and the second data are transmitted; the target SNR being an SNR targeted at the receiver.

According to a sixth aspect, further to any of the first to fifth aspects, the common data is transmitted with a higher power than the first data and the second data.

According to a seventh aspect, a data receiving device is provided, comprising: a receiver configured to receive a signal carrying encoded first data, encoded second data, and common data at the same time on different beams; processing circuitry configured to: Obtain a first redundancy version from the common data which is a separable combination of the first redundancy version and a second redundancy version; Obtain first data by forward error correction, FEC, decoding of the encoded first data and based on the first redundancy version.

According to an eighth aspect, further to the seventh aspect, the common data is transmitted with a higher signal to noise ratio than the first data, the common data are carried in the signal as encoded common data, and the processing circuitry is configured to: Obtain an estimation of first data by FEC decoding the encoded first data by considering the common data as noise; Obtain the common data by FEC decoding the encoded common data; and Obtain the first data by combining the estimation of first data and the common data.

According to a ninth aspect, further to the eighth aspect, the combining applies at least one of Maximum A'posteriori Probability (MAP); Log Likelihood Ratio (LLR); Maximum Likelihood Ratio (MLR); Bahl, Cocke, Jelinek, and Raviv (BCJR) Algorithm; and soft output Viterbi algorithm.

According to a tenth aspect, further to the seventh aspect, the processing circuitry is configured to: apply Successive Interference Cancellation (SIC) based on the decoding of the common data and the received signal; and obtain the first data by combining the output of the SIC and the common data.

According to the eleventh aspect, a data transmitting method is provided, comprising: obtaining first data addressed to a first wireless device and second data addressed to a second wireless device different from the first wireless device; generating a first redundancy version from the first data and a second redundancy version from the second data; obtaining common data as a separable combination of the first redundancy version and the second redundancy version; obtaining encoded first data by forward error correction code, FEC, encoding, of the first data and obtain encoded second data by FEC encoding of the second data; and transmitting a signal carrying the encoded first data, the encoded second data, and the common data at the same time on different beams.

According to a twefth aspect, a data receiving method is provided, comprising: receiving a signal carrying encoded first data, encoded second data, and common data at the same time on different beams; obtaining a first redundancy version from the common data which is a separable combination of the first redundancy version and a second redundancy version; and obtaining first data by forward error correction, FEC, decoding of the encoded first data and based on the first redundancy data.

According to a thirteenth aspect, a computer program is provided, stored on a non-transitory medium and comprising code instructions, which, when executed on one or more processors, cause the one or more processor to execute the method according to the eleventh or the twelfth aspect.

Moreover, a processing circuitry is provided, which may be an integrated chip, IC, and which is configured to perform the functions defined for the processing circuitry of the above data transmitting or data receiving device according to any of the first to tenth aspect.

**Claims**

1. A data transmitting device comprising:

   processing circuitry configured to:

   - Obtain first data addressed to a first wireless device and second data addressed to a second wireless device different from the first wireless device;
   - Generate a first redundancy version from the first data and a second redundancy version from the second data;
   - Obtain common data as a separable combination of the first redundancy version and the second redundancy version; and
   - Obtain encoded first data by forward error correction code, FEC, encoding, of the first data and obtain encoded second data by FEC encoding of the second data, and

   a transmitter configured to transmit a signal carrying the encoded first data, the encoded second data, and the common data at the same time on different beams.

2. The data transmitting device according to claim 1, further comprising obtaining encoded common data by FEC encoding the common data, wherein said signal carries the common data as the encoded common data.

3. The data transmitting device according to claim 1 or 2, wherein the generating of the first redundancy version and/or the second redundancy version is generated as parity bits, cyclic redundancy check, FEC bits, punctured bits or based on compressing sensing signal.

4. The data transmitting device according to any of claims 1 to 3, wherein the separable combination is a concatenation.

5. The data transmitting device according to any of claims 1 to 4, wherein the common data is transmitted with a signal to noise ratio, target SNR, higher than the target SNR with which the first data and the second data are transmitted; the target SNR being an SNR targeted at the receiver.

6. The data transmitting device according to any of claims 1 to 5, wherein the common data is transmitted with a higher power than the first data and the second data.

7. A data receiving device, comprising:

   a receiver configured to receive a signal carrying encoded first data, encoded second data, and common data at the same time on different beams;
   processing circuitry configured to:

   - Obtain a first redundancy version from the common data which is a separable combination of the first redundancy version and a second redundancy version;
   - Obtain first data by forward error correction, FEC, decoding of the encoded first data and based on the first redundancy version.

8. The data receiving device according to claim 7, wherein

the common data is transmitted with a higher signal to noise ratio than the first data, the common data are carried in the signal as encoded common data, and the processing circuitry is configured to:

- Obtain an estimation of first data by FEC decoding the encoded first data by considering the common data as noise;
- Obtain the common data by FEC decoding the encoded common data;
- Obtain the first data by combining the estimation of first data and the common data.

9. The data receiving device according to claim 8, wherein the combining applies at least one of Maximum a'posteriori Probability (MAP); Log Likelihood Ratio (LLR); Maximum Likelihood Ratio (MLR); Bahl, Cocke, Jelinek, and Raviv (BCJR) Algorithm; and soft output Viterbi algorithm.

10. The data receiving device according to claim 7, wherein the processing circuitry is configured to:

apply Successive Interference Cancellation (SIC) based on the decoding of the common data and the received signal; and obtain the first data by combining the output of the SIC and the common data.

11. A data transmitting method comprising:

obtaining first data addressed to a first wireless device and second data addressed to a second wireless device different from the first wireless device;
generating a first redundancy version from the first data and a second redundancy version from the second data;
obtaining common data as a separable combination of the first redundancy version and the second redundancy version;
obtaining encoded first data by forward error correction code, FEC, encoding, of the first data and obtain encoded second data by FEC encoding of the second data; and
transmitting a signal carrying the encoded first data, the encoded second data, and the common data at the same time on different beams.

12. A data receiving method, comprising:

receiving a signal carrying encoded first data, encoded second data, and common data at the same time on different beams;

obtaining a first redundancy version from the common data which is a separable combination of the first redundancy version and a second redundancy version; and obtaining first data by forward error correction, FEC, decoding of the encoded first data and based on the first redundancy data.

13. Computer program stored on a non-transitory medium and comprising code instructions, which, when executed on one or more processors, cause the one or more processor to execute the method according to claim 11 or 12.

CS

Tx ———|——— Rx

Intf

**FIG. 1**

**FIG. 2**

DL →

UL ←

BS

UE

**FIG. 3**

BS

DL → UE 1

→ UE 2

→ UE 3

→ UE 4

EP 4 589 868 A1

FIG. 4

FIG. 5

FIG. 6

EP 4 589 868 A1

19

355_1

User 1

360

$Y_1$

Decoding

$D_c$

380

Splitter

$D_{c_1}$

390

365

SIC

Combiner

$D_1$

370

Decoding

$D_{p_1}$

355_2

$Y_2$

User 2

400

FIG. 7

FIG. 8

EP 4 589 868 A1

FIG. 9

At TX

P1     1 0 1 1 0 0 1 0

P2     0 1 1 0 1 1 0 1

C1     0 1 1 0

C2     0 0 1 0

0 1 1 0 0 0 1 0

FIG. 10

EP 4 589 868 A1

**At RX**

C    01100010

C1    0   1   1   0          C2    0   0   1   0

P1    10110010             P2    01101101

FIG. 11

## At RX

C    0 1 1 0 0 0 1 0

C1    0  1  1  0          C2    0  0  1  0

P1    1 0 1 1 0 0 1 0     P2    1 1 1 0 1 1 0 0

error

## FIG. 12

600

```
┌─────────────────────────┐
│ 610 Obtain first data and│
│      second data         │
└─────────────────────────┘
             │
             ▼
┌─────────────────────────┐
│ 620 Generate RV1 and RV1│
│                         │
└─────────────────────────┘
             │
             ▼
┌─────────────────────────┐
│ 630 Combine RV1 and RV2 to│
│     a common part        │
└─────────────────────────┘
             │
             ▼
┌─────────────────────────┐
│ 640 Encode the first data and│
│     the second data      │
└─────────────────────────┘
             │
             ▼
┌─────────────────────────┐
│ 650 transmit encoded first and│
│ second data and the common│
│ data on different beams.  │
└─────────────────────────┘
```

**FIG. 13**

700

```
┌─────────────────────────┐
│ 710 Obtain RV1 from     │
│     common data          │
└─────────────────────────┘
             │
             ▼
┌─────────────────────────┐
│ 720 Obtain first data part by│
│ FEC decoding of encoded first│
│     data part            │
└─────────────────────────┘
             │
             ▼
┌─────────────────────────┐
│ 720 Obtain first data by │
│ combining first data part and│
│           RV1            │
└─────────────────────────┘
```

**FIG. 14**

**FIG. 15**   800

Memory 810

Processing circuitry 820

801

Wireless transmitter 830

User interface 840

**FIG. 16**

Memory 810a

RV forming module 870

Common part generation 880

FEC 890

**FIG. 17**

Memory 810b

910  RV1 decoder

First data Decoder 920

Combiner 930

EP 4 589 868 A1

**EUROPEAN SEARCH REPORT**

Application Number

EP 24 15 2461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2021/211249 A1 (HAO CHENXI [CN] ET AL)<br>8 July 2021 (2021-07-08)<br>* paragraph [0026] *<br>* paragraph [0047] - paragraph [0078] *<br>* figures 2-6 * | 7,10,12,<br>13<br>1-6,8,9,<br>11 | INV.<br>H04J11/00<br>H04L1/00<br><br>ADD.<br>H04B7/0452 |
| A | MAO YIJIE ET AL: "Rate-Splitting Multiple Access: Fundamentals, Survey, and Future Research Trends",<br>IEEE COMMUNICATIONS SURVEYS & TUTORIALS, IEEE,<br>vol. 24, no. 4, 15 July 2022 (2022-07-15),<br>pages 2073-2126, XP011928216,<br>DOI: 10.1109/COMST.2022.3191937<br>[retrieved on 2022-07-18]<br>* Section I-A;<br>page 2073 - page 2075; figure 1 * | 1-13 | H04B7/06 |
| A | WO 2022/236756 A1 (NOKIA SHANGHAI BELL CO LTD [CN] ET AL.)<br>17 November 2022 (2022-11-17)<br>* paragraph [0031] *<br>* paragraph [0040] - paragraph [0041] *<br>* figures 2, 4 * | 1-13 | TECHNICAL FIELDS SEARCHED (IPC)<br><br>H04L<br>H04B<br>H04J |
| A | US 2018/219600 A1 (KIM HEEJIN [KR] ET AL)<br>2 August 2018 (2018-08-02)<br>* paragraph [0104] - paragraph [0106] *<br>* figure 6 * | 1-13 | |

The present search report has been drawn up for all claims

| Place of search | Date of completion of the search | Examiner |
|---|---|---|
| Munich | 11 June 2024 | Vucic, Nikola |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 2461

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2024

| Patent document cited in search report | | Publication date | Patent family member(s) | | Publication date |
|---|---|---|---|---|---|
| US 2021211249 | A1 | 08-07-2021 | CN | 112020894 A | 01-12-2020 |
| | | | EP | 3782419 A1 | 24-02-2021 |
| | | | US | 2021211249 A1 | 08-07-2021 |
| | | | WO | 2019200602 A1 | 24-10-2019 |
| | | | WO | 2019201262 A1 | 24-10-2019 |
| WO 2022236756 | A1 | 17-11-2022 | CN | 117296343 A | 26-12-2023 |
| | | | EP | 4338440 A1 | 20-03-2024 |
| | | | US | 2024129006 A1 | 18-04-2024 |
| | | | WO | 2022236756 A1 | 17-11-2022 |
| US 2018219600 | A1 | 02-08-2018 | US | 2018219600 A1 | 02-08-2018 |
| | | | US | 2020145074 A1 | 07-05-2020 |
| | | | WO | 2017018671 A1 | 02-02-2017 |

EPO FORM P0459

For more details about this annex : see Official Journal of the European Patent Office, No. 12/82